# EUROPÄISCHE PATENTSCHRIFT

(11) **EP 1 040 741 B1**
(45) Veröffentlichungstag und Bekanntmachung des Hinweises auf die Patenterteilung: **29.09.2004**
(21) Anmeldenummer: 00106255.3
(22) Anmeldetag: 30.07.1997
(51) Int. Cl.: A01B 45/02

(54) **Bearbeitungsgerät für die Tiefenlockerung von Böden**
Subsoiling machine
Outil pour ameublir le sol en profondeur

(30) Priorität: 31.07.1996 DE 19630961
(43) Veröffentlichungstag der Anmeldung: 04.10.2000
(62) Teilanmeldung aus: 97937418.8
(73) Patentinhaber: Wiedenmann GmbH, 89192 Rammingen (DE)
(72) Erfinder: Herrn Wiedenmann, Georg, 89192 Rammingen (DE)
(74) Vertreter: Kastel, Stefan Dipl.-Phys.

(56) Entgegenhaltungen:
- EP-A- 0 037 595
- WO-A-89/12381
- WO-A-91/07076
- DE-A- 4 323 315
- DE-U- 29 607 530
- US-A- 3 204 703
- US-A- 4 632 189
- US-A- 5 570 746

## Beschreibung

Die Erfindung betrifft ein Bodenbearbeitungsgerät nach dem Oberbegriff des beigefügten Anspruchs 1, wie es aus der US 4 632 189 A bekannt ist.

Die US 4 632 189 A betrifft ein selbstfahrendes Bodenbearbeitungsgerät für die Tiefenlockerung von Böden. Es weist eine senkrecht zur Fahrtrichtung angeordnete Aufeinanderfolge von Werkzeugen auf, die über eine Nockenwelle auf und ab bewegt werden. Für alle Werkzeuge ist ein einzelner durch einen Balken gebildeter Anschlag vorgesehen. Bei Abwärtsbewegung stechen die Werkzeuge in den Boden ein. Fährt dann das Gerät weiter, bewegt sich das im Boden eingestochene Werkzeug vom Anschlag weg, bis es teils durch die Fahrt, teils durch die Aufwärtsbewegung aus dem Boden herausgezogen wird und federbelastet wieder zum Anschlag zurückschlägt. Der Anschlagsbalken ist an einem Paar Seitenteilen befestigt, die jeweils an Seitenwänden des Geräterahmens schwenkbar befestigt sind. Um das Gerät im Leerlauf über Flächen bewegen zu können, die nicht belüftet werden sollen, lässt sich der Anschlagbalken von einer Betriebsposition, in der er die Stechwerkzeuge in einer im wesentlichen vertikalen Richtung hält in eine Leerlaufposition bringen, in der die Stechwerkzeuge so stark abgewinkelt sind, dass sie bei ihrer Auf- und Abbewegung den Boden nicht mehr berühren.

Bearbeitungsgeräte für die Tiefenlockerung von Böden sind in unterschiedlicher Ausführung bekannt, so beispielsweise dergestalt, daß die Stechwerkzeuge in einer vertikalen, in Fahrtrichtung verlaufenden Ebene verschwenkbar an einem steuerbaren Werkzeugträger gelagert und unter der Kraft einer Feder gegen Anlage an einem Anschlag beaufschlagt sind, der sicherstellt, daß das Stechwerkzeug vor Eindringen in den Boden eine bestimmte Ausrichtung zu diesem aufweist, die insbesondere mit der Druckbelastungsrichtung bei Eindringen in den Boden zumindest annähernd übereinstimmt. Das Einstechen der Werkzeuge in den Boden geschieht bei in Fahrtrichtung bewegtem Gerät, durch welche Fahrbewegung das in den Boden eingedrungene Werkzeug in gewisser Weise verschwenkt, jedoch nicht so weit, daß bei Herausziehen des Werkzeuges eine Aufbrechbewegung der Bodenoberfläche erfolgt. Die geringe Versetzbewegung im Boden aus der durch den Anschlag vorgegebenen Ausrichtlage herausführt das Werkzeug gegen die Kraft der vorerwähnten Feder aus. Nach Verlassen des Bodens wird das Werkzeug unter der Kraft der Feder wieder gegen den Anschlag und damit in die Ausgangslage zurück verschwenkt. Die Betätigung des Werkzeuges bzw. von Gruppen solcher Werkzeuge geschieht in an sich bekannter Weise mit Hilfe eines Kurbeltriebes, der im Zuge der Fahrbewegung des Gerätes entsprechend der gewünschten Einstechdichte angetrieben wird. Ein solches Gerät ist beispielsweise aus der U.S. 3,204,703 bekannt.

Die EP 0452449 B1 zeigt eine Parallelausrichtung des Werkzeuges über einen gesamten Bewegungszyklus hinweg, wodurch es möglich ist, die Einstechtiefe der Werkzeuge allein dadurch einzustellen, daß man den Geräterahmen gegenüber einer bodenseitigen Abstützung - Bodenwalze - höhenverstellbar gestaltet. Durch ein Verstellen des Anschlages ist es unabhängig davon möglich, die Ausrichtung der Werkzeuge gegenüber der Ebene des zu bearbeitenden Bodens zu verändern, wodurch man die Art der Auflockerung im Boden beeinflussen kann.

Der Erfindung liegt die Aufgabe zugrunde, ein Gerät (siehe auch EP-A-37595) der in Rede stehenden Art zu schaffen, das bei einfacher und robuster, wartungsarmer Ausgestaltung eine bequem zugängliche Einstellbarkeit des Einstechwinkels, insbesondere gepaart mit einer Einstellung der Einstechtiefe der Werkzeuge ermöglicht.

Diese Aufgabe wird durch ein Gerät nach Anspruch 1 gelöst.

Vorteilhafte Ausgestaltungen der Erfindung sind Gegenstand der Unteransprüche. Eine Verstelleinrichtung zum Einstellen des Einstechwinkals für solch ein Gerät ist im Nebenanspruch angegeben.

Die Erfindung schafft ein fahrbares oder an ein Fahrzeug anzuschließendes Bearbeitungsgerät für die Tiefenlockerung von Böden, beispielsweise unterhalb einer Grasnarbe, mit einer im wesentlichen senkrecht zur Fahrtrichtung verlaufend angeordneten Aufeinanderfolge von Stechwerkzeugen bzw. Werkzeughalter, deren jeder in einem der Endbereiche eines Tragarmes angelenkt ist, der anderen Endes an einem Geräterahmen verschwenkbar gelagert ist, an dem eine in einer vertikalen und in Fahrtrichtung verlaufenden Ebene wirksame Antriebsstange, insbesondere eines Kurbeltriebes, angreift und an dem ein koaxial zur Anlenkachse des Werkzeughalters verschwenkbarer zweiarmiger Einstellhebel gehalten ist, an dessen nach unten abragendem Arm ein auf einen unterhalb der Gelenkachse befindlichen Bereich des Werkzeughalters ausgerichteten Anschlag aufweist und an dessen nach oben abragendem Arm eine Verstelleinrichtung angreift, mit der die Winkeistellung des Einstellhebels zum Tragarm und damit über den Anschlag der Einstechwinkel des Stechwerkzeuges gegenüber dem Boden bestimmbar ist wobei der Werkzeughalter mittels einer Federeinrichtung in Anlage an den Anschlag beaufschlagt ist und diesen bei Einstich in den Boden durch den dadurch gegen Fahrtrichtung auftretenden Widerstand gegen die Federkraft verläßt.

Die Federeinrichtung ist bevorzugt seitlich des Tragarmes angeordnet, insbesondere in Form zweier paralleler Zugfedern, die vorzugsweise an ein und derselben Seite des Tragarmes angeordnet sind, während die Verstelleinrichtung zumindest mit einem Teil ihrer Bauelemente von oben gesehen an der anderen Seite des vorzugsweise doppelstrebigen Tragarmes verläuft.

Erfindungsgemäß ist eine sämtlichen oder einer Gruppe von Einstellhebeln gemeinsame Zentralverstellachse vorgesehen, die über verdrehfest an ihr ausgebildete Ausleger über Verbindungsstangen, die starr oder aber auch für Justierzwecke mit längenveränderlichen Elementen ausgebildet sein können, mit den freien Enden der nach oben abragenden Arme der Einstellhebel auschließbar sind. Diese Zentralverstellachse kann mittels eines verdrehfesten Handhebels, vorzugsweise stufenlos, in verschiedene Verschwenkstellungen gegenüber dem Geräterahmen eingestellt und in der jeweiligen Stellung festgelegt werden, wodurch zumindest eine Gruppe, vorzugsweise sämtliche Einstellhebel in gleicher Weise gegenüber ihren Tragarmen in bestimmte Winkelstellungen verschwenkt werden, so daß sich durch entsprechende Lageänderung der Anschläge an den unteren Armen der Einstellhebel der Einstechwinkel der Werkzeuge der zugehörigen Werkzeughalter zugleich und durch die gemeinsame Zentralverstellachse durch eine Verschwenkbewegung einstellen läßt.

In bevorzugter Ausgestaltung läßt sich die Verstellung des Einstechwinkels der Werkzeuge an die gewählte Einstechtiefe anpassen, so daß - ungeachtet einer Einzeleinstellbarkeit - eine Tiefenverstellung automatisch eine angepaßte Einstechwinkelveränderung mit sich bringt. Dazu kann beispielsweise die Höheneinstellbewegung zwischen dem Geräterahmen und einer abstützenden Bodenwalze durch einen Mitnehmer auf die Zentralverstellachse übertragen werden.

Der im freiendenden Bereich des nach unten abragenden Armes des zweiarmigen Einstellhebels angeordnete Anschlag kann einen elastisch verformbaren stoßabfangenden Körper aufweisen oder bzw. gegebenenfalls zusätzlich einen Stoßdämpfer tragen der als pneumatische, insbesondere hydraulische, Kolben-Zylinder-Einrichtung ausgebildet ist und dessen Kolbenstange, an dem der anschlagende Bereich der Werkzeugträger vorzugsweise angreift, mit der Zylinderinnenwandung durch einen Balg staubdicht abgeschlossen ist. Durch eine Ventileinrichtung im Kolben und/oder in einem Zylinderraumbypass kann sichergestellt werden, daß die Dämpfung und die Rückführbewegung des Kolbens auf den Betrieb des Werkzeuges auch bei schneller Fahrweise abgestimmt sind. In bevorzugter Ausführung läßt sich der Stoßdämpfer, vorzugsweise durch eine Kontermuttereinstellung in dem vom Boden abgewandten Bereich, derart einjustieren, daß der Angriff des betroffenen Dämpfergliedes, vorzugsweise der Kolbenstange, an dem Anlagebereich des rückfedernden Werkzeugträgers angreift, bevor dieser den eigentlichen Anschlag erreicht.

Insbesondere bei Bruch auch nur einer Feder der vorzugsweise doppelfedrigen Federeinrichtung kann der Werkzeugträger dazu neigen, in Gegenanschlagrichtung zu verschwenken. Für diesen Fall ist der Einstellhebel in bevorzugter Ausbildung im nach rückwärts gewandten Bereich seines nach oben abragenden Armes mit einer Rückschlagsperre - einer vorspringenden Nase - ausgestattet, die den Werkzeugträger bei rückwärtigem Ausschlag abfängt.

In weiterhin besonders bevorzugter Ausführung ist dem Anschlag eine Dämpfungseinrichtung zugeordnet, dergestalt, daß sich die Kraft-Weg-Charakteristiken überlagern, insbesondere in Reihenschaltung, vor allem bei Ausstattung des Anschlages mit einem Aufschlagdämpfer, dessen Dämpfungscharakteristik vorzugsweise von derjenigen der Dämpfungseinrichtung abweichend ausgebildet ist. Bevorzugt ist dabei die Dämpfungseinrichtung steifer ausgebildet als die an den Stechwerkzeugen angreifende Federeinrichtung (Zugfedern), so daß eine Verstellung des Einstechwinkels von der Federeinrichtung aufgenommen wird und die Dämpfungseinrichtung sich dabei nicht verformt. Zu diesem Zweck ist die Dämpfungseinrichtung vorzugsweise entsprechend vorgespannt. Dazu befindet sich die Dämpfungseinrichtung bevorzugt im Bereich der Verstelleinrichtung und greift an den nach oben ragenden Arm des Einstellhebels an. Die Dämpfungseinrichtung kann als Druckfeder, insbesondere als Schraubendruckfeder ausgebildet sein, die mit Federsitzen koaxial zum Schaft einer als Verstelleinrichtung ausgebildeten Einstellschraube auf diesem angeordnet ist, und daß der nach oben ragende Arm des Einstellhebels an ein an dem Schaft längsbeweglich gelagerten Gelenkstück angelenkt ist, wobei das Gelenkstück an dem Schaft hinsichtlich seiner Verschiebebewegung gegen die Kraft der Druckfeder gegebenenfalls unter deren Vorspannung mittels einer Festlegeeinrichtung begrenzbar ist.

Die Erfindung wird anhand der in der Zeichnung wiedergegebenen Ausführungsbeispiele nachstehend näher erläutert. Es zeigen:
Fig. 1 eine schematische Seitenansicht auf eine erste Ausführungsform;
Fig. 2 eine vergrößerte Teilansicht auf das werkzeugseitige Ende des Tragarms einen abgewandelten Geräts;
Fig. 3a,b Teilseitenansicht und teilgeschnittene Draufsicht zur Erläuterung der zentralen Verstellung für die Ausführungen nach den Fig. 1 und 4
Fig. 4 eine Seitenansicht entsprechend Fig. 1 einer zweiten Ausführung.
Fig. 5 eine Teilseitenansicht zur Erläuterung weiterer Geräte.

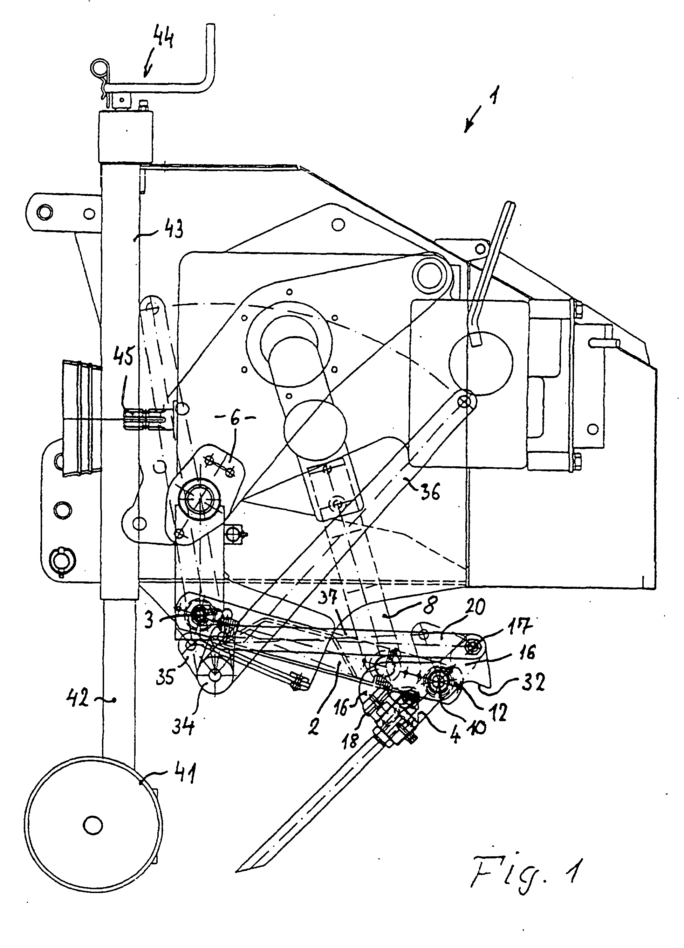

Aus Fig. 1 ist ein insgesamt mit 1 bezeichnetes Bodenbearbeitungsgerät für die Tiefenlockerung ersichtlich, das als Nachlaufgerät für den Anbau an eine Zugmaschine ausgebildet und insgesamt mit 1 bezeichnet ist. Nachfolgend werden nur die funktionswesentlichen und zur Verdeutlichung benötigten Merkmale bzw. Bauteile angesprochen, da Geräte dieser Art von der Gattung her bekannt sind; im übrigen wird auf die insgesamt wiedergegebenen Ausführungsbeispiele in ihrer gezeichneten Form ausdrücklich Bezug genommen.

An dem Geräterahmen 6 des Gerätes 1 ist ein Tragarm 2 an seinem in Fahrtrichtung gesehenen vorderen Ende in einer rahmenfesten Verschwenklagerung 3 gehalten. An dem nach rückwärts abragenden Endbereich des Tragarmes 2 ist ein Einstechwerkzeug in einem Werkzeughalter 4 auswechselbar festgelegt; von diesen Werkzeugen nebst zugeordneten Tragarmen, Einstellhebeln und Kurbeltriebantriebsstangen sind senkrecht zur Fahrtrichtung und parallel zum Boden verlaufend eine Reihe von Werkzeugen bzw. Werkzeugsätzen angeordnet, die rhythmisch - bevorzugt paarweise aufeinanderfolgend - in den Boden eingestoßen und aus diesem wieder ausgehoben werden. Von diesen Werkzeugen bzw. Werkzeugträgern nebst zugehörigen Einrichtungen ist auch in den folgenden Beispielen jeweils nur einer dargestellt.

Der Werkzeughalter 4 ist um eine Anlenkachse 10 im nach rückwärts ragenden, der rahmenfesten Verschwenklagerung 3 abgewandten Endbereich des zugehörigen Tragarmes 2 verschwenkbar gelagert. Koaxial zu dieser Anlenkachse 10 ist an dem Tragarm 2 ein zweiarmiger Einstellhebel 12 drehgelagert, an dessen nach unten abragendem Arm 14 ein Anschlag 18 vorgesehen ist, und zwar in Ausrichtung auf eine Anlagefläche des Werkzeughalters 4, mit der dieser an dem Anschlag 18 aufgrund der koaxialen Verschwenklagerung an dem Tragarm 2 in jeder Winkellage zwischen dem Einstellhebel 12 und dem Tragarm 2 in gleicher Ausrichtung anschlägt, wodurch der Verschleiß in diesem Bereich minimal ist. Im freien Endbereich des nach oben abragenden Armes 16 des Einstellhebels 12 ist eine insgesamt mit 20 bezeichnete Verstelleinrichtung bei 17 angelenkt, deren Ausbildung in verschiedenen Varianten nachstehend noch geschildert wird. Im Nahbereich der Anlenkachse 10 ist eine Antriebsstange 8 eines nur angedeuteten Kurbeltriebes angelenkt, mit welchem der Tragarm 2 in bekannter Weise um die Anlenkung 3 verschwenkend in einem Zyklus bewegt wird, in welchem das Stechwerkzeug in den Boden eingeführt und aus diesem wieder herausgeführt wird, wobei unter Berücksichtigung der Fahrbewegung des nicht gezeigten Zugfahrzeuges nach links in der Zeichenebene das im Boden befindliche Werkzeug um die Anlenkachse 10 von dem Anschlag fortbewegt wird. Bei Ausheben aus dem Boden wird das Werkzeug bzw. der Halter 4 wieder in Anlage an den Anschlag gebracht, und zwar unter Einwirkung einer Federeinrichtung 22, die ebenfalls unterschiedlich ausgebildet sein kann und die sich vornehmlich zwischen einem unterhalb der Anlenkachse 10 an dem Werkzeughalter 4 befindlichem Angriffspunkt einen Endes und einem zumindest im Nahbereich, vorzugsweise in Achsrichtung der Verschwenklagerung 3 des Tragarmes 2, gelegenen Angriffspunkt andererseits erstreckt. Unter bestimmten Bedingungen, insbesondere bei Bruch oder Teilbruch der Zugfedereinrichtung 22, kann der Werkzeugträger nach rückwärts also entgegen der Anlagerichtung an dem Anschlag 18 verschwenken. Zur Begrenzung dieser Verschwenkbewegung ist an dem Einstellhebel 12 als Rückschlagsperre 32 eine Nase ausgebildet, wie dies die Zeichnung erkennen läßt. Zur Einstellung der Einstechtiefe kann der an einem entsprechend beweglichen Dreipunktlenker des Zugfahrzeuges gehaltene Geräterahmen 6 dadurch in seinem Abstand zum Boden eingestellt werden, daß an ihm eine bodenseitige Stützwalze 41 über einen Träger 42 teleskopartig in einem Rohr 43 geführt ist, zwischen welchen beiden Teilen 42 und 43 eine mittels einer Kurbel betätigbare Schraubspindelverbindung 44 besteht. Der nur angedeutete Kurbeltrieb wird über einen eingangsseitig bei 45 angedeuteten Zapfwellenantrieb vom Zugfahrzeug aus in Umdrehung versetzt.

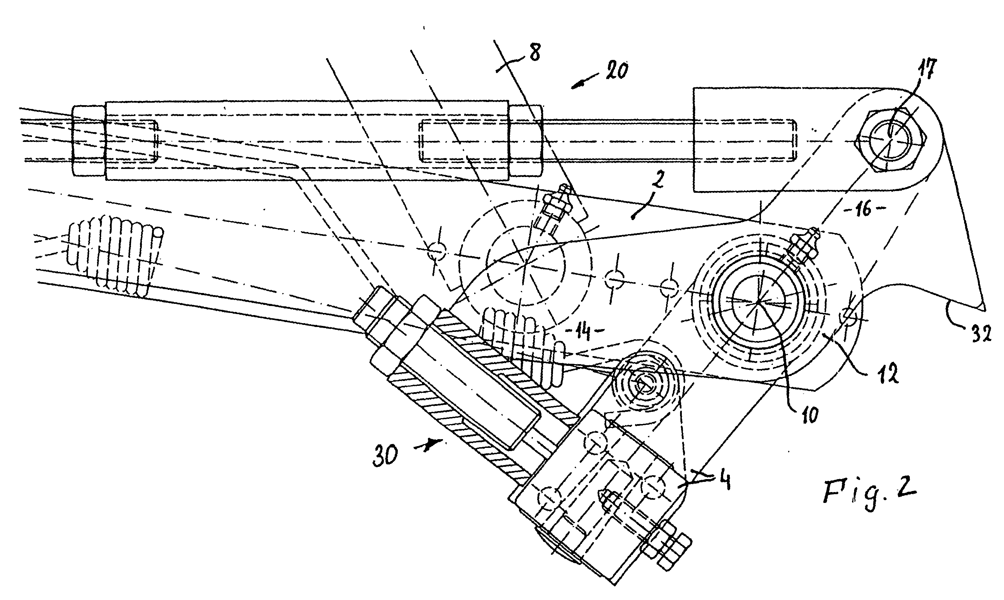

Fig. 2 zeigt am Beispiel eines Geräts mit abgewandelter, nicht von der Erfindung umfasster Verstelleinrichtung eine vergrößerte Teilseitenansicht der koaxialen Anordnung von Werkzeughalter 4 und Einstellhebel 12 mit einem Anschlag 18, der einen insgesamt mit 30 bezeichneten hydraulischen Stoßdämpfer aufweist. Der die Kolbenstange führende Zylinderkörper ist über ein Gewinde in einer Hülse in Längsrichtung der Stange verstellbar und mit einer dem Boden abgewandten Kontermutter festlegbar. Der Zylinderraum ist durch eine Balgmembran zwischen Kolbenstange und Zylinderinnenwandung gegen Schmutzeintritt geschützt. So lässt sich ein vorzugsweise entsprechend gedämpft ausgebildeter Anschlag im nach unten abragenden Armbereich des Einstellhebels 12 gefahrlos und wartungsfrei verwirklichen. Durch die Verstellbarkeit der Gewindeverbindung zwischen der Außenwandung des Zylinders und der Innenwandung der umgebenden Hülse lässt sich bestimmen, um welche Strecke die Kolbenstange über die als Anschlag wirksame, der Anlagefläche des Werkzeughalters 4 zugewandte Stirnwandung der Hülse hinausragt, um die beabsichtigte Dämpfung zu bewirken. Dämpfungs- und Rückstellverhalten des Stoßdämpfers können durch Bypassventilausbildung angepasst werden.

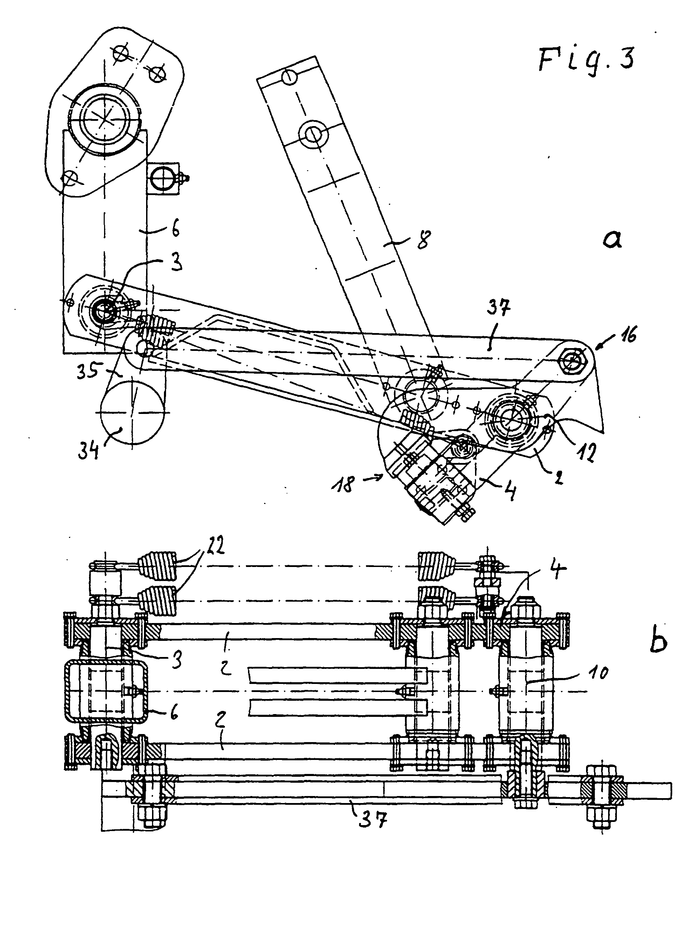

Fig. 3 zeigt in vergrößerter Teildarstellung eine grundsätzliche Ausbildung der Verstelleinrichtung 20 für eine gleichzeitige und durch eine Verstellbewegung vorzunehmende Änderung des Werkzeug-Einstechwinkels sämtlicher Werkzeuge des Gerätes. Zu diesem Zwecke ist eine Zentralverstellachse 34 vorgesehen, an der Ausleger 35 verdrehfest angeordnet sind, deren jeder über eine Verbindungsstange 37 mit dem nach oben abragenden Arm 16 des zugehörigen Einstellhebels 12 in Verschwenkverbindung steht. Die Zentralverstellachse 34 ist unterhalb der Verschwenklagerung 3 für die Tragarme 2 in nicht weiter dargestellter Weise rahmenfest gelagert. Es ist ersichtlich, dass bei Verschwenken der Zentralachse über die jeweiligen Ausleger 35 - nur einer gezeigt - und die Verbindungsstangen 37 die Einstellhebel 12 verschwenkbar sind. Es müssen nicht sämtliche Werkzeuge an eine Zentralverstellachse angeschlossen sein. Grundsätzlich kann man eine Gruppe von Werkzeugen gemeinsam und gleichzeitig ausrichten. Fig. 1 zeigt eine Ausführung mit Zentralverstellachse, bei der diese über einen Hebel 36 verschwenkbar ist, wodurch die Einstechwinkellage bestimmt werden kann. Unabhängig davon läßt sich die Einstechtiefe durch den Spindeltrieb mit der Handkurbel 44 in bereits beschriebener Weise bestimmen.

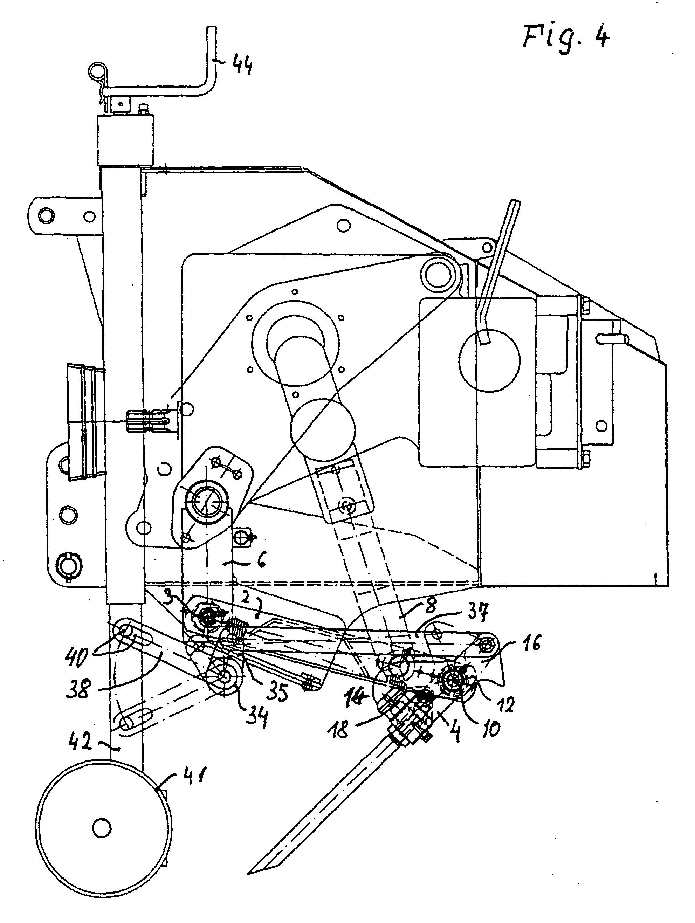

Fig. 4 zeigt ein zweites Ausführungsbeispiel ähnlich demjenigen nach Fig. 1, bei dem anstelle des Handhebels 36 ein mit der Zentralverstellachse 34 verdrehfest seitlich abragender Mitnehmer 38 verbunden ist, der über einen Zapfen-Langloch-Eingriff 40 mit dem Stützwalzenträger 42 getrieblich verbunden ist. Auf diese Weise wird eine Verstellung der Werkzeug-Einstechtiefe in den Boden durch Drehen der Handkurbel 44 mit einer Verstellung des Einstechwinkels zwangsgekoppelt und durch einen Einstellvorgang für alle Werkzeuge gleichzeitig möglich, womit einem Zusammenhang zwischen Einstechwinkel und Einstechtiefe zwangsgesteuert Rechnung getragen werden kann.

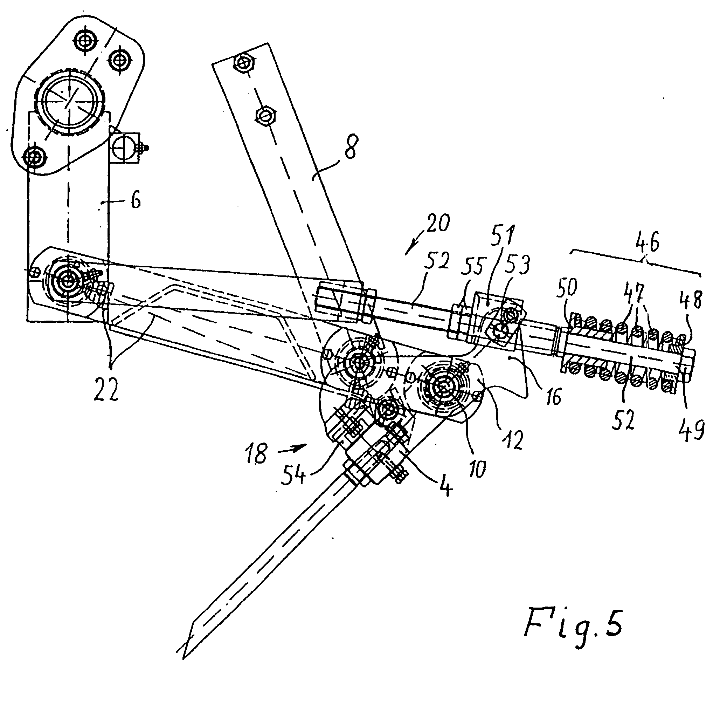

Das weitere Gerät gemäß Figur 5 lehnt sich in seiner Teilseitenansicht an ein Gerät mit nicht erfindungsgemäßer Verstelleinrichtung an, kann aber auch im Zusammenhang mit den erfindungsgemäßen Ausführungsbeispielen Anwendung finden. Das Gerät nach Figur 5 zeichnet sich dadurch aus, daß der nach oben abragende Arm 16 des Einstellhebels 12 nicht starr an die Verstelleinrichtung 20 angeschlossen ist, sondern angekoppelt über eine Dämpfungseinrichtung 46, die in gleicher Beaufschlagungsrichtung wie der Anschlag 18 wirksam ist. Im bevorzugten, dargestellten Ausführungsbeispiel ist die Dämpfungseinrichtung 46 mittels einer Schraubendruckfeder 47 verwirklicht, die einen Endes über einen ersten Federsitz 48 an der nach hinten/außen ragenden, als Schraube 49 ausgebildeten Verstelleinrichtung 20 abgestützt und anderen Endes über einen zweiten Federsitz 50 und ein Gelenkstück 51 an den nach oben ragenden Arm 16 des Einstellhebels 12 angeschlossen ist. Das Gelenkstück 51 und die Druckfeder 47 mir ihren Federsitzen 48 und 50 sind koaxial auf den Schaft 52 der Schraube 49 aufgesetzt und in dessen Achsrichtung verschiebbar gehalten. Das Gelenkstück 51 ist mittels einer aus Kontermuttern bestehende Festlegeeinrichtung 55 an der der Druckfeder 47 abgewandten Seite hinsichtlich dessen Verschiebbarkeit begrenzt, so daß durch Einstellung dieser Begrenzung die Druckfeder 47 vorgespannt werden kann.

Das Gelenkstück 51 ist bei 53 an dem nach oben ragenden Arm 16 des Einstellhebels 12 angelenkt, so daß eine Drehbewegung des Einstellhebels 12 unter Einwirkung der Stechwerkzeuge 4 gegen den Anschlag 18 über den Federsitz 50 auf die Druckfeder 47 übertragen wird, die über den Federsitz 48 an dem Kopf der Einstellschraube 49 abgestützt ist. Die Kraft der Zugfeder 22 ist bei Anliegen des Stechwerkzeuges bzw. des Werkzeughalters 4 an dem Anschlag 18 des Einstellhebels 12 gegen die Kraft der Druckfeder 47 gerichtet. Da die Druckfeder 47 steifer und/oder vorgespannter als die Zugfedereinrichtung 22 ist, läßt sich der Einstechwinkel der Stechwerkzeuge 4 mittels der Einstellschraube 49 exakt und nicht schwimmend einstellen, was prinzipiell bei schwächerer Druckfeder auch möglich wäre.

Der Anschlag 18 ist mit einem Aufschlagdämpfer 54 versehen, der eine andere Dämpfungscharakteristik als die Dämpfungseinrichtung in Gestalt der Druckfeder 47 aufweist, so daß aufgrund der unterschiedlichen Frequenzgänge ein "breites Dämpfungsfrequenzband" gegen die unterschiedlichen Schlagbelastungen des Einstellhebels 12 bereit gestellt wird.

Durch die Dämpfungseinrichtung (Druckfeder 47) wird eine zusätzliche Dämpfung bei betriebsgerechtem Anschlagen der Stechwerkzeuge 4 an den Anschlag 18 des Einstellhebels 12 zur Verfügung gestellt. Des weiteren wird ein Überlastschutz für die Stechwerkzeuge bereitgestellt, wenn beispielsweise bei Rückwärtsfahrt diese gegen einen Stein oder dergleichen Anlaufen oder bei Vorwärtsfahrt ein Eindringen in den Boden behindert ist und die Stechwerkzeuge nach vom abgleiten. Schließlich ist bei schräg stehenden Stechwerkzeugen ein schnelleres Absenken auf den Boden möglich. Bei all diesen Vorgängen dient die Dämpfungseinrichtung (Druckfeder 47) dem Ausweichen des Werkzeuges und verhindert damit dessen Beschädigung. Insgesamt läßt sich mit dieser Dämpfungseinrichtung eine wesentlich schnellere Arbeitsweise ermöglichen.

## Patentansprüche

1. Fahrbares oder an ein Fahrzeug anzuschließendes Bearbeitungsgerät (1) für die Tiefenlockerung von Böden, beispielsweise unterhalb einer Grasnarbe, mit einer im wesentlichen senkrecht zur Fahrtrichtung verlaufend angeordneten Aufeinanderfolge von Stechwerkzeugen bzw. Werkzeughalter (4), deren jeder in einem der Endbereiche eines anderen Endes an einem Geräterahmen (6) verschwenkbar gelagerten, durch eine in einer vertikalen und in Fahrtrichtung verlaufenden Ebene wirksame Antriebsstange (8), insbesondere eines Kurbeltriebes, beaufschlagten Tragarmes (2) angelenkt und unter der Kraft einer Federeinrichtung (22) in Anlage an einen Anschlag (18) beaufschlagt ist, und diesen bei Einstich in den Boden durch den dadurch gegen Fahrtrichtung auftretenden Widerstand entgegen der Federkraft verlässt, wobei der Anschlag (18) den Einstechwinkel des Stechwerkzeuges gegenüber dem Boden bestimmend auf das Stechwerkzeug bzw. den Werkzeughalter (4) zu bzw. von diesem fort gerichtet einstellbar ist,
**gekennzeichnet durch** eine Verstelleinrichtung (20) zur Einstellung des Anschlags (18) und damit Bestimmung des Einstechwinkels des Einstechwerkzeuges zum Boden, die eine Zentralverstellachse (34) aufweist, die mittels jeweils zugeordneter seitlicher Ausleger (35) über Einstellglieder (37, 12) mit den zugehörigen Anschlägen (18) einer Gruppe der Werkzeughalter (4) in Verbindung stehen, welche Zentralverstellachse (34) im Nahbereich der an dem Geräterahmen (6) vorgesehenen Verschwenklager (3) der Tragarme (2) rahmenfest drehgelagert ist, wobei an dem Tragarm (2) ein koaxial zur Anlenkachse (10) des Werkzeughalters (4) verschwenkbarer zweiarmiger Einstellhebel (12) gehalten ist, an dessen nach unten abragenden Arm (14) der Anschlag (18) ausgebildet ist und an dessen nach oben abragenden Arm (16) die Verstelleinrichtung (20) angreift.

2. Gerät nach Anspruch 1,
**dadurch gekennzeichnet,**
**dass** die Zentralverstellachse (34) unterhalb der Verschwenklager (3) der Tragarme (2) verlaufend angeordnet ist.

3. Gerät nach Anspruch 1 oder 2,
**dadurch gekennzeichnet,**
**dass** die Zentralverstellachse (34) mittels eines Verstellhebels (36) zur Bestimmung unterschiedlicher Einstechwinkel - insbesondere stufenlos - in entsprechend verschiedene Verschwenkstellungen überführbar und in diesen arretierbar ist.

4. Gerät nach Anspruch 1 oder 2,
**dadurch gekennzeichnet,**
**dass** die Zentralverstellachse (34) an eine die Tiefeneinstellung des Stechwerkzeugeingriffs in den Boden bestimmende Versetzeinrichtung angeschlossen ist, insbesondere über einen verdrehfest seitlich abragenden Mitnehmer an der Halterung eines bodenseitigen Stützradpaares oder einer Stützwalze mitnehmend angreift, welche Halterung über einen Spindeltrieb höhenverstellbar an dem Geräterahmen (6) gehalten ist.

5. Gerät nach einem der Ansprüche 1 - 4,
**dadurch gekennzeichnet,**
**dass** an dem nach oben abragenden Arm (16) des Einstellhebels (12) ein Ende einer zugehörigen Verbindungsstange (37) angelenkt ist, deren anderes Ende an einen zugehörigen Ausleger (35) angelenkt ist.

6. Gerät nach einem der Ansprüche 1 bis 5,
**dadurch gekennzeichnet,**
**dass** die Federeinrichtung (22) auf Zug beanspruchbar zwischen dem Werkzeughalter (4) und einer zumindest im Nahbereich der rahmenfesten Verschwenklagerung (3) des Tragarmes (2), insbesondere dessen Schwenklagerache umgreifend gegebenenfalls unter Vorspannung eingesetzt ist.

7. Gerät nach Anspruch 6,
**dadurch gekennzeichnet,**
**dass** die Federeinrichtung (22) seitlich des, insbesondere aus zwei parallelen Streben gebildeten, Tragarmes (2) angeordnet ist und vorzugsweise zwei parallel angeordnete Federn umfasst.

8. Gerät nach Ansprüche 1 - 7,
**dadurch gekennzeichnet,**
**dass** im Bereich des Anschlages (18) diesen bildend oder zusätzlich zu einem elastisch verformbaren Aufschlagelement ein Stoßdämpfer (30) vorgesehen ist.

9. Gerät nach Anspruch 8,
**dadurch gekennzeichnet,**
**dass** der Stoßdämpfer (30) am nach unten abragenden Arm (16) des Einstellhebels (12) angeordnet und insbesondere mit einer in Aufschlagrichtung des Werkzeughalters (14) versetzbaren Kolbenstange einer Fluidzylindereinrichtung in staubdichter Ausführung als Stoßabfangelement ausgebildet ist.

10. Gerät nach einem der Ansprüche 1 bis 9,
**dadurch gekennzeichnet,**
**dass** im Bereich des nach oben abragenden Armes (16) des Einstellhebels (12) eine Rückschlagsperre (32), insbesondere in Gestalt einer etwa in Tragarmrichtung abstrebenden Nasenausbildung, für das Abfangen des Werkzeugträgers (14), insbesondere bei Brechen der Federeinrichtung oder auch nur einer deren Federn, vorgesehen ist.

11. Verstelleinrichtung (20) für ein Bearbeitungsgerät nach einem der voranstehenden Ansprüche,
zur Änderung des Werkzeug-Einstechwinkels einer im wesentlichen senkrecht zur Fahrtrichtung verlaufend angeordneten Aufeinanderfolge von Stechwerkzeugen bzw. Werkzeughaltern (4),
**gekennzeichnet**
**durch** eine Zentralverstellachse (34) zur gleichzeitigen und durch eine Verstellbewegung vorzunehmenden Änderung des Werkzeug-Einstechwinkels sämtlicher oder einer Gruppe der Werkzeuge und
**durch** eine Reihe von an der Zentralverstellachse (34) verdrehfest angeordneter Ausleger (35) und
**durch** eine Drehlagerung, mit der die Zentralverstellachse (34) im Nahbereich von Verschwenklagern (3) von Tragarmen (2) für die Stechwerkzeuge bzw. Werkzeughalter (4) relativ zum Rahmen verschwenkbar lagerbar ist,
wobei die Zentralverstellachse (34) an ihren jeweiligen Auslegern (35) über Einstellglieder (37, 12) mit den zugehörigen Anschlägen (18) sämtlicher oder einer Gruppe der Werkzeughalter (4) des Geräts in Verbindung bringbar ist.

12. Verstelleinrichtung nach Anspruch 11,
**dadurch gekennzeichnet,**
**dass** sie weiter einen Verstellhebel (36) aufweist, mittels welchem die Zentralverstellachse (34) zur Bestimmung unterschiedlicher Einstechwinkel in entsprechende Verschwenkstellungen überführbar ist und
**dass** die Zentralverstellachse in diesen Verschwenkstellungen arretierbar ist.

13. Verstelleinrichtung nach Anspruch 12,
**dadurch gekennzeichnet,**
**dass** die Zentralverstellachse (34) stufenlos verschwenkbar und arretierbar ist.

## Claims

1. A self-propelled or vehicle-attached soil working apparatus (1) for the deep loosening of earth, for example under turf, with a series of piercing tools or tool holders (4) disposed substantially perpendicular to the direction of travel, each one of which is pivoted in one of the end areas of a supporting arm (2), the other end thereof being swivellably mounted on a machine frame (6), said supporting arm (2) being acted upon by a drive rod (8), especially of a crank drive, acting in a vertical plane extending in the direction of travel, and each one of which is acted upon by a spring apparatus (22) in its position of contact with a detent (18), and moves away from this, counter to the spring force, when inserted into the ground, as a result of the resistance occurring counter to the direction of travel, the detent (18) being adjustable towards or away from the piercing tool or the tool holder (4), thereby determining the angle of insertion of the piercing tool relative to the ground,
**characterised by** an adjustment mechanism (20) for adjusting the detent (18) and thereby determining the angle of insertion of the piercing tool relative to the ground, this adjustment mechanism (20) having a central adjustment spindle (34) connected by associated lateral crossbars (35) via adjustment members (37, 12) to the associated detents (18) of a group of the tool holders (4), said central adjustment spindle (34) being rotatably mounted, fixed to the frame (6), in the vicinity of the swivel mounts (3) of the supporting arms (2), while a two-armed adjusting lever (12), pivotable coaxial to the axis of articulation (10) of the tool holder (4), is secured to the supporting arm (2), the detent (18) being provided on the downwardly-projecting arm (14) of said adjusting lever (12) while the adjustment mechanism (20) acts on the upwardly projecting arm (16) thereof.

2. Apparatus according to claim 1, **characterised in**
**that** the central adjustment spindle (34) is arranged to extend underneath the swivel mounts (3) of the supporting arms (2).

3. Apparatus according to claim 1 or 2, **characterised in**
**that** the central adjustment spindle (34) can be moved by means of an adjustment lever (36) - especially by smooth progression - into correspondingly different swivel positions and can be locked in these positions, in order to set different insertion angles.

4. Apparatus according to claim 1 or 2, **characterised in**
**that** the central adjustment spindle (34) is attached to a displacing device which determines the depth of penetration of the piercing tool into the ground, said spindle (34) especially engaging in driving manner with the mounting of a ground-side pair of stabiliser wheels or a stabiliser roller via a cam (38) which projects laterally in a torsionally rigid manner, the mounting being held on the machine frame (6) so as to be vertically adjustable by means of a spindle drive.

5. Apparatus according to one of claims 1 to 4,
**characterised in that** one end of an associated connecting rod (37) is articulated on the upwardly-projecting arm (16) of the adjustment lever (12), the other end of said rod (37) being articulated on an associated crossbar (35).

6. Apparatus according to one of claims 1 to 5, **characterised in that** the spring apparatus (22) is inserted so as to be subject to tensile loading between the tool holder (4) and a at least in the vicinity of the frame-secured swivel mount (3) of the supporting arm (2), particularly embracing the axis thereof, optionally under pre-tension.

7. Apparatus according to claim 6, **characterised in**
**that** the spring apparatus (22) is disposed laterally with respect to the supporting arm (2) which is formed particularly from two parallel struts and preferably comprises two springs disposed in parallel.

8. Apparatus according to claims 1 to 7, **characterised in**
**that** a shock absorber (30) is provided in the area of the detent (18), forming the latter, or is provided in addition to an elastically deformable impact element.

9. Apparatus according to claim 8, **characterised in**
**that** the shock absorber (30) is arranged on the downwardly projecting arm (16) of the adjustment lever (12) and in particular is constructed as an impact absorbing element with a piston rod of a fluid cylinder apparatus of dustproof construction which is moveable in the direction of impact of the tool holder (14).

10. Apparatus according to one of claims 1 to 9, **characterised in**
**that** a recoil block (32), particularly in the form of a nose formation extending downwards in the direction of the supporting arm, is provided in the area of the upwardly-projecting arm (16) of the adjustment lever (12), in order to catch the tool holder (14), especially in the event of failure of the spring apparatus, or even just one of its springs.

11. Adjustment mechanism (20) for a soil working apparatus according to one of the preceding claims, for altering the angle of insertion of the tool of a series of piercing tools or tool holders (4) disposed substantially perpendicular to the direction of travel, **characterised by** a central adjustment spindle (34) for altering the tool insertion angle of all or some of the tools simultaneously by means of an adjusting action and a series of crossbars (35) non-rotatably fixed on the central adjustment spindle (34) and a rotary mounting by means of which the central adjustment spindle (34) can be mounted to be pivotable relative to the frame in the vicinity of swivel mounts (3) of supporting arms (2) for the piercing tools or tool holders (4), the central adjustment spindle (34) being connectable, by its respective crossbars (35), via adjustment means (37, 12), to the associated detents (18) of all or some of the tool holders (4) of the apparatus.

12. Adjustment mechanism according to claim 11, **characterised in**
**that** it further comprises an adjustment lever (36) by means of which the central adjustment spindle (34) can be moved into corresponding swivel positions in order to determine different angles of insertion and the central adjustment spindle (34) can be locked in these swivel positions.

13. Adjustment device according to claim 12, **characterised in**
**that** the central adjustment spindle (34) can be pivoted and locked in a smoothly progressive movement.

## Revendications

1. Appareil (1) automoteur ou relié à un véhicule pour ameublir en profondeur des sols, par exemple en dessous de la couche végétale, comportant une suite de broches ou de porte-outils (4) qui se succèdent principalement dans la direction perpendiculaire à la direction de déplacement, et dont chacun est monté dans la zone de son autre extrémité, de manière pivotante au châssis (6) de l'appareil, en étant articulé par l'intermédiaire d'un bras de support (2) sollicité par une part d'entraînement (8), notamment une transmission à manivelle, travaillant dans un plan vertical, dans la direction de déplacement, et soumis à la force d'une installation à ressort (22) pour venir en appui contre une butée (18), et qui, enfoncée dans le sol, quitte cette butée contre la force développée par le ressort, du fait de la résistance opposée à la direction de déplacement
la butée (18) définissant l'angle d'enfoncement de la broche par rapport au sol vers ou en s'écartant de la broche ou du porte-outil (4),
**caractérisé par**
une installation de réglage (20) de la butée (18) définissant ainsi l'angle d'enfoncement de la broche dans le sol, cette installation de réglage comportant un axe central de réglage (34) issu des bras latéraux (35), respectivement associés, et des organes de réglage (37, 12) pour coopèrer avec des butées correspondantes (18) d'un groupe de porte-outils (4), cet axe de réglage central (34) étant monté à rotation solidairement au châssis, dans la zone proche des paliers de basculement (3) des bras de support (2) du châssis (6) de l'appareil,
un levier de réglage (12) à deux bras pivotant sur le bras de support (2), coaxialement à l'axe d'articulation (10) du porte-outil (4), et le bras (14) tourné vers le bas de ce levier de réglage formant la butée (18) et son bras (16) tourné vers le haut coopérant avec l'installation de réglage (20).

2. Appareil selon la revendication 1,
**caractérisé en ce que**
l'axe central de réglage (34) passe sous la palier de pivotement (3) des bras de support (2).

3. Appareil selon la revendication 1 ou 2,
**caractérisé en ce que**
l'axe central de réglage (34) peut être mis dans différentes positions de basculement et bloqué dans celles-ci par l'intermédiaire d'un levier de réglage (36) pour définir des angles d'enfoncement différents, notamment de façon continue.

4. Appareil selon la revendication 1 ou 2,
**caractérisé en ce que**
l'axe central de réglage (34) est raccordé à une installation de déplacement qui définit le réglage en profondeur de la pénétration de la broche dans le sol, notamment par un organe d'entraînement solidaire en rotation, venant latéralement en saillie, et attaquant le support d'une paire de roues d'appui sur le sol ou d'un cylindre d'appui, ce support étant tenu de manière réglable en hauteur au châssis (6) de l'outil par l'intermédiaire d'une transmission à broche.

5. Appareil selon l'une des revendications 1 à 4,
**caractérisé en ce que**
le bras (16) du levier de réglage (12) tourné vers le haut est articulé à une extrémité d'une bielle (37) correspondante dont l'autre extrémité est articulée à un bras correspondant (35).

6. Appareil selon l'une des revendications 1 à 5,
**caractérisé en ce que**
l'installation à ressort (22), sollicitée en traction est montée entre le support d'outil (4) et un palier pivotant (3) du bras de support (2), solidaire du châssis, au moins dans la zone proche, notamment en entourant son axe de pivotement, le cas échéant avec précontrainte.

7. Appareil selon la revendication 6,
**caractérisé en ce que**
l'installation à ressort (22) est installée à côté notamment du bras de support (2) formé par deux entretoises parallèles, et elle comprend de préférence deux ressorts parallèles.

8. Appareil selon l'une des revendications 1 à 7,
**caractérisé par**
un amortisseur (30) prévu au niveau de la butée (18) et qui forme celui-ci ou en plus d'un élément de butée déformable élastiquement.

9. Appareil selon la revendication 8,
**caractérisé en ce que**
l'amortisseur (30) prévu sur le bras (16) tourné vers le bas du levier de réglage (12) comporte une tige de piston d'un vérin à fluide étanche à la poussière, comme élément amortisseur de chocs, dans la direction de sollicitation du porte-outil (14).

10. Appareil selon l'une des revendications 1 à 9,
**caractérisé en ce qu'**
au niveau du bras (16) en saillie vers le haut appartenant au levier de réglage (12) il est prévu une barrière anti-retour (32), notamment sous la forme d'un bec en saillie dans la direction du bras de support, pour recevoir le support d'outil (14), notamment en cas de rupture de l'installation à ressorts ou seulement d'un de ses ressorts.

11. Installation de réglage (20) pour un appareil selon l'une des revendications précédentes,
pour modifier l'angle d'enfoncement de l'outil d'une suite de broches ou de porte-outils (4) qui se succèdent essentiellement dans une direction perpendiculaire à la direction de déplacement,
**caractérisée par**
un axe de réglage central (34) pour effectuer simultanément et par un mouvement de réglage, des modifications de l'angle d'enfoncement de l'outil pour tous les outils ou ceux d'un groupe et
par une rangée de bras (35) solidaires en rotation de l'axe central de réglage (34) et
par un palier de rotation recevant l'axe de réglage central (34) dans la zone proche des paliers de basculement (3) des bras de support (2) pour les broches ou le porte-outils (4), permettant un mouvement de basculement par rapport au châssis,
l'axe de réglage central (34) pouvant être mis par des bras respectifs (35) et des organes de réglage (37, 12) en liaison avec des butées correspondantes (18) de tous les porte-outils (4) de l'outil ou seulement un groupe de ceux-ci.

12. Installation de réglage selon la revendication 11,
**caractérisée en ce qu'**
elle comporte en outre un levier de réglage (36) permettant de faire passer l'axe central de réglage (34) dans des positions de pivotement correspondantes pour déterminer des angles d'enfoncement différents et l'axe central de réglage pouvant être bloqué dans ces positions de réglage.

13. Installation de réglage selon la revendication 12,
**caractérisée en ce que**
l'axe central de réglage (34) peut pivoter en continu et être bloqué.
